# EUROPÄISCHE PATENTSCHRIFT

(11) **EP 2 681 437 B1**
(45) Veröffentlichungstag und Bekanntmachung des Hinweises auf die Patenterteilung: **10.05.2017**
(21) Anmeldenummer: 12727233.4
(22) Anmeldetag: 02.03.2012
(51) Int. Cl.: F02F 3/22

(54) **KOLBEN FÜR EINEN VERBRENNUNGSMOTOR UND VERFAHREN ZU SEINER HERSTELLUNG**
PISTON FOR AN INTERNAL COMBUSTION ENGINE, AND METHOD FOR THE PRODUCTION THEREOF
PISTON POUR MOTEUR À COMBUSTION INTERNE ET SON PROCÉDÉ DE PRODUCTION

(30) Priorität: 04.03.2011 DE 102011013113
(43) Veröffentlichungstag der Anmeldung: 08.01.2014
(73) Patentinhaber: Mahle International GmbH, 70376 Stuttgart (DE)
(72) Erfinder: BING, Karlheinz, 71686 Remseck (DE); LAPP, Michael T., Bloomfield, Michigan 48301 (US); SCHARP, Rainer, 71665 Vaihingen (DE); ULLRICH, Michael, 71696 Möglingen (DE)
(74) Vertreter: BRP Renaud & Partner mbB Rechtsanwälte Patentanwälte Steuerberater
(86) Internationale Anmeldenummer: PCT/DE2012/000232
(87) Internationale Veröffentlichungsnummer: WO 2012/119591

(56) Entgegenhaltungen:
- EP-A1- 2 625 411
- WO-A1-2007/144111
- WO-A1-2012/045445
- DE-A1- 3 643 039
- DE-A1- 10 209 168
- DE-A1-102004 019 010
- DE-A1-102007 061 601
- US-A- 5 778 533
- US-A1- 2004 055 460
- US-A1- 2012 080 004

## Beschreibung

Die vorliegende Erfindung betrifft einen Kolben für einen Verbrennungsmotor mit einem Kolbenkopf, einem Kolbenschaft und einer zwischen dem Kolbenkopf und dem Kolbenschaft ausgebildeten umlaufenden Ausnehmung. Die vorliegende Erfindung betrifft ferner ein Verfahren zur Herstellung eines derartigen Kolbens. Ein Kolben mit einem Grundkörper, einem Ringelement, das zwischen einem Wandbereich der Verbrennungsmulde und einer Ringpartie einen mit einem Verschlusselement verschlossenen umlaufenden Kühlkanal aufweist, ist aus US 2004 0055460 bekannt. Ein gattungsgemäßer Kolben ist bspw. aus der DE 44 46 726 A1 bekannt und wird auch als "Kolben mit thermisch entkoppeltem Kolbenschaft" bezeichnet. Derartige Kolben zeichnen sich durch eine hohe Festigkeit und aufgrund der thermischen Entkopplung von Kolbenkopf und Kolbenschaft durch eine hohe Wärmebeständigkeit aus. Nachteilig ist ihre vergleichsweise große Bauhöhe, die sich durch eine verfahrenstechnisch bedingte Mindesthöhe der ringförmigen Ausnehmung ergibt.

Die Aufgabe der vorliegenden Erfindung besteht darin, einen gattungsgemäßen Kolben so weiterzuentwickeln, dass bei gleich bleibend guten mechanischen und thermischen Eigenschaften die Bauhöhe reduziert ist.

Die Lösung besteht darin, dass der Kolben einen Kolbengrundkörper und ein Kolbenringelement aufweist, dass der Kolbengrundkörper zumindest einen Bodenbereich einer Verbrennungsmulde sowie den Kolbenschaft aufweist, dass das Kalbenringelement zumindest einen Kolbenboden, einen Wandbereich der Verbrennungsmulde, einen umlaufenden Feuersteg und eine mit Ringnuten versehene umlaufende Ringpartie aufweist, dass das Kolbenringelement zwischen dem Wandbereich der Verbrennungsmulde und der Ringpartie einen mit einem Verschlusselement verschlossenen umlaufenden Kühlkanals aufweist, dass der Kolbengrundkörper und das Kolbenringelement im Bereich der Verbrennungsmulde eine umlaufende Fügenaht aufweisen, über welche sie unlösbar miteinander verbunden sind.

Gegenstand der Erfindung ist ferner ein Verfahren zur Herstellung eines derartigen Kolbens mit den folgenden Verfahrensschritten: (a) Bereitstellen eines Rohlings eines Kolbengrundkörpers, der zumindest einen Bodenbereich einer Verbrennungsmulde, einen Kolbenschaft sowie eine Fügefläche im Bereich der Verbrennungsmulde aufweist; (b) Bereitstellen eines Rohlings eines Kolbenringelements, das zumindest einen Kolbenboden, einen Wandbereich einer Verbrennungsmulde, eine umlaufende Aussparung sowie eine Fügefläche im Bereich der Verbrennungsmulde aufweist; (c) Verbinden des Rohlings des Kolbengrundkörpers mit dem Rohling des Kolbenringelements über ihre Fügeflächen zu einem Kolbenrohling, (d) Nachbearbeiten und/oder Fertigbearbeiten des Kolbenrohlings zum Kolben.

Die erfindungsgemäße Idee besteht darin, einen Kolben mit thermisch entkoppeltem Kolbenschaft mit einem als separatem Bauteil ausgebildeten Kolbenringelement zu versehen. Die Aussparung, die im fertigen Kolben als umlaufender Kühlkanal dient, kann in beliebiger Größe und Bauhöhe somit vorab in das Kolbenringelement eingearbeitet werden. Damit entfällt die Notwendigkeit, die umlaufende Ausnehmung, welche die thermische Entkopplung des Kolbenschafts bewirkt, mit einer derartig großen Bauhöhe auszubilden, durch die bei dem im Stand der Technik bekannten Kolben die Herstellung des Kühlkanals mittels spanender Bearbeitung erst ermöglicht wird. Der erfindungsgemäße Kolben gestattet es somit, die Höhe der umlaufenden Ausnehmung und damit die Bauhöhe frei zu wählen und bei Bedarf möglichst niedrig zu halten.

Vorteilhafte Weiterbildungen ergeben sich aus den Unteransprüchen.

Eine bevorzugte Weiterbildung besteht darin, dass die Fügenaht mit der Mittelachse des Kolbens einen spitzen Winkel einschließt. Diese Ausgestaltung erlaubt eine besonders einfache Anwendung eines Schweißverfahrens zum Fügen der Kolbenbauteile. Insbesondere beim Strahlschweißen, bspw. Laserschweißen, kann die Richtung der austretenden Schweißperlen derart gesteuert werden, dass sie außerhalb des Kühlkanals verbleiben bzw. nicht auf das Verschlusselement treffen.

Zweckmäßigerweise ist das Verschlusselement im Bereich der Ringpartie am Kolbenringelement gehalten, Diese Ausgestaltung erlaubt eine besonders einfache Montage des Verschlusselements. Erfindungsgemäß liegt das kühlkanalseitige Ende der Fügenaht außerhalb des Kühlkanals. Auf diese Weise können, je nach verwendetem Fügeverfahren, gegebenenfalls Materialreste wie Schweißwulste auf einfache Weise entfernt werden. Ferner wird vermieden, dass derartige Materialreste den Kühlkanal verengen bzw. verunreinigen.

Eine weitere besonders bevorzugte Ausführungsform besteht darin, dass der freie Rand des Verschlusselements oberhalb der Fügenaht angeordnet ist. Diese Ausgestaltung erlaubt es, die Aussparung bereits im Rohling des Kolbenringelements vor dem Verbinden mit dem Rohling des Kolbengrundkörpers zu verschließen. Dies ist besonders dann von Vorteil, wenn die Rohlinge des Kolbenringelement und des Kolbengrundkörpers mittels Strahlschweißen, insbesondere Laserschweißen, miteinander verbunden werden sollen. Die bei diesem Fügeverfahren auftretenden Schweißperlen können in diesem Fall während des Fügeprozesses nicht in den Kühlkanal gelangen und diesen verengen oder verschmutzen. In diesem Fall kann das Verschlusselement auch bereits vor dem Fügen dauerhaft im Bereich der Ringpartie befestigt werden. Das Verschlusselement kann aber auch vor dem Fügen reversibel bzw. austauschbar angebracht und, beispielsweise im Falle einer Verschmutzung mit Schweißperlen, im Anschluss an den Fügeprozess durch ein sauberes Verschlusselement ersetzt werden.

Selbstverständlich kann das Verschlusselement auch erst nach dem Fügevorgang unter Ausbildung des Kühlkanals am Kolben angebracht werden.

Das Verschlusselement ist bevorzugt als einstückiges oder mehrstückiges Blechbauteil ausgebildet. Im montiertem Zustand kann sein freies Ende am Kolben anliegen oder in Form eines Spaltes vom Kolben beabstandet sein. Das Verschlusselement kann auch als einstückiges oder mehrstückiges Federblech ausgebildet sein. Dann kann das Verschlusselement derart am Kolben befestigt sein, dass sein freier Rand unter Vorspannung am Kolben anliegt, um den Kühlkanal besonders sicher zu verschließen.

Das Verschlusselement weist zweckmäßigerweise mindestens eine Eintrittsöffnung und mindestens eine Austrittsöffnung für Kühlöl auf. Hierbei kann mindestens eine Einlassöffnung ein in den Kühlkanal ragendes hülsenförmiges Führungselement für das Kühlöl aufweist. Ein derartiges Führungselement kann bspw. bei der Herstellung des Verschlusselements in dieses eingeformt werden.

Die vorliegende Erfindung ist für alle anspruchsgemäßen Kolbenbauvarianten geeignet. Der Kolbengrundkörper bzw. sein Rohling kann außer dem Bodenbereich der Brennraummulde auch einen Teil des Wandbereiches aufweisen.

Ein Ausführungsbeispiel der vorliegenden Erfindung wird im Folgenden anhand der beigefügten Zeichnungen näher erläutert. Es zeigen in einer schematischen, nicht maßstabsgetreuen Darstellung:
- Fig. 1: ein Ausführungsbeispiel eines erfindungsgemäßen Kolbens im Schnitt;
- Fig. 2: den Kolben gemäß Figur 1 im Schnitt, in einer um 90° gedrehten Darstellung;
- Fig. 3: eine vergrößerte Darstellung des Kolbenringelements des Kolbens gemäß Figur 1 mit einem Verschlusselement;
- Fig. 4: eine vergrößerte Darstellung eines Kragens im Verschlusselement gemäß Figur 3;
- Fig. 5: ein Ausführungsbeispiel eines Rohlings eines Kolbenringselements für einen erfindungsgemäßen Kolben im Schnitt;
- Fig. 6: ein Ausführungsbeispiel eines Rohlings eines Kolbengrundkörpers für einen erfindungsgemäßen Kolben im Schnitt;
- Fig. 7: der Rohling eines Kolbenringelements gemäß Figur 5 mit daran befestigtem Verschlusselement;
- Fig. 8: einen Kolbenrohling aus den Bauteilen gemäß den Figuren 6 und 7.

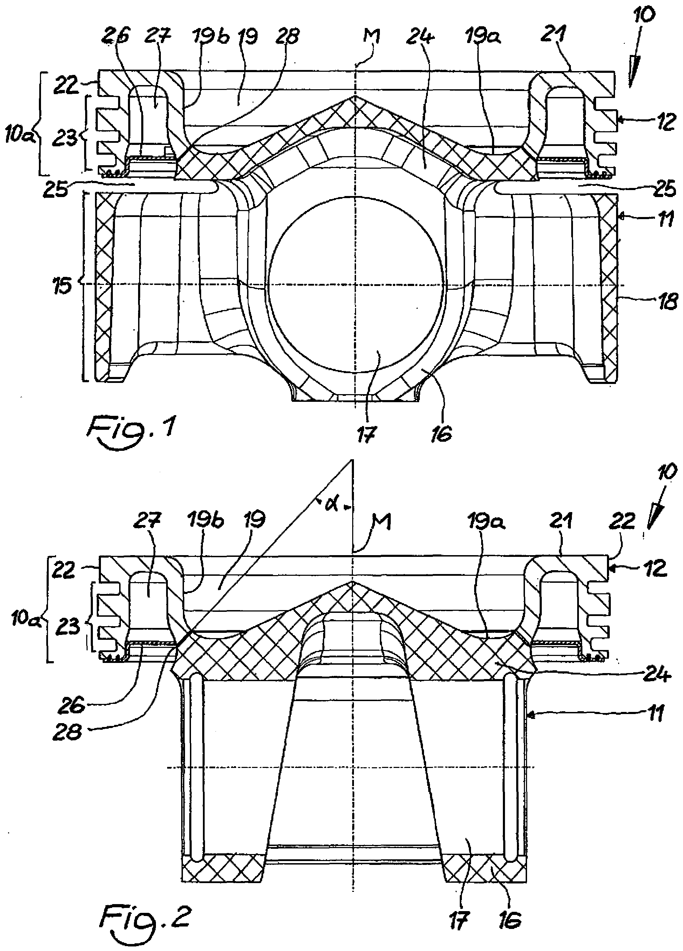

Die Figuren 1 und 2 zeigen ein besonders bevorzugtes Ausführungsbeispiel eines erfindungsgemäßen Kolbens 10. Der Kolben 10 weist einen Kolbengrundkörper 11 und ein Kolbenringelement 12 auf. Beide Bauteile können aus jedem beliebigen metallischen Werkstoff bestehen, der zum Fügen der Bauteile geeignet ist. Der Kolbengrundkörper 11 und das Kolbenringelement 12 bilden zusammen den Kolbenkopf 10a und den Kolbenschaft 15 des Kolbens 10.

Der Kolbengrundkörper 11 weist einen Kolbenschaft 15 auf, der in an sich bekannter Weise mit Naben 16 und Nabenbohrungen 17 zur Aufnahme eines Kolbenbolzens sowie mit Laufflächen 18 versehen ist. Das Kolbenringelement 12 weist einen Kolbenboden 21 sowie einen umlaufenden Feuersteg 22 und eine umlaufende Ringpartie 23 zur Aufnahme von Kolbenringen auf.

Der Kolben 10 bzw. der Kolbenkopf 10a ist ferner mit einer Verbrennungsmulde 19 versehen. Hierbei weist der Kolbengrundkörper 11 einen Bodenbereich 19a der Verbrennungsmulde 19 auf, während das Kolbenringelement 12 einen Wandbereich 19b der Verbrennungsmulde 19 aufweist.

Die Naben 16 des Kolbengrundkörpers 11 sind über Nabenanbindungen 24 an der Unterseite des Bodenbereichs 19a der Verbrennungsmulde 19 angehängt. Der Kolbenschaft 15 ist durch eine umlaufende ringförmige Ausnehmung 25 von der Ringpartie 23 getrennt. Somit ist der Kolbenschaft 15 vom Kolbenkopf 10a thermisch entkoppelt.

Das Kolbenringelement 12 weist zwischen dem Wandbereich 19b der Verbrennungsmulde 19 und der Ringpartie 23 einen mit einem Verschlusselement 26 verschlossenen umlaufenden Kühlkanal 27 auf.

Der Kolbengrundkörper 11 und das Kolbenringelement 12 sind durch Fügen, im Ausführungsbeispiel bevorzugt mittels Laserschweißen, miteinander verbunden. Dadurch ist im Bereich der Verbrennungsmulde 19 eine Fügenaht 28 gebildet, welche in diesem besonders bevorzugten Ausführungsbeispiel einen spitzen Winkel α mit der Mittelachse M des Kolbens 10 einschließt.

Die erfindungsgemäße Ausbildung des Kolbens 10 mit einem Kolbengrundkörper 11 und einem Kolbenringelement 12 erlaubt es, eine den späteren Kühlkanal 27 bildende Aussparung 27a in beliebiger Größe und Bauhöhe vorab in das Kolbenringelement 12 einzuformen. Damit entfällt die Notwendigkeit, die umlaufende Ausnehmung 25, welche die thermische Entkopplung des Kolbenschafts 15 vom Kolbenkopf 10a bewirkt, mit einer derartig großen Bauhöhe auszubilden, durch die bei dem im Stand der Technik bekannten Kolben die Herstellung des Kühlkanals mittels spanender Bearbeitung erst möglich wird. Der erfindungsgemäße Kolben 10 gestattet es somit, die Höhe der umlaufenden Ausnehmung 25 und damit die Bauhöhe, wie in Figur 1 dargestellt, möglichst gering zu halten.

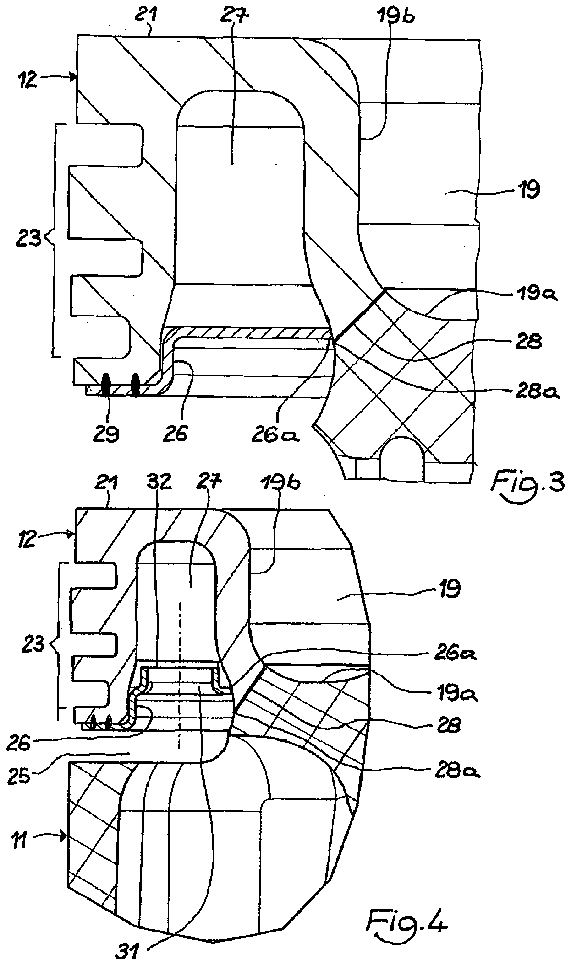

Figur 3 zeigt eine vergrößerte Detailaufnahme des Kolbenringelements 12 des Kolbens 10 gemäß Figur 1. Bei dem dargestellten besonders bevorzugten Ausführungsbeispiel ist der Kühlkanal 27 mittels eines Verschlusselements 26 verschlossen. Das Verschlusselement 26 kann einteilig oder mehrteilig ausgebildet sein. Das Verschlusselement 26 ist an der Unterseite der Ringpartie 23 des Kolbenringelements 12 im Ausführungsbeispiel mittels Schweißstellen 29 befestigt. Selbstverständlich kann das Verschlusselement 26 durch beliebige andere Verfahren mit dem Kolben 10 verbunden sein. Der freie Rand 26a des Verschlusselements 26 liegt im Ausführungsbeispiel an der Rückseite des Wandbereichs 19b der Verbrennungsmulde 19 des Kolbenringelements 12 an. Der freie Rand 26a des Verschlusselements 26 kann auch in Form eines Spalts von der Rückseite des Wandbereichs 19b der Verbrennungsmulde beabstandet sein. Wenn das Verschlusselement 26 als Federblech ausgebildet ist, kann sein freier Rand 26a auch unter Vorspannung an der Rückseite des Wandbereichs 19b der Verbrennungsmulde 19 anliegen.

Diese besonders bevorzugte Ausgestaltung des erfindungsgemäßen Kolbens 10 beinhaltet, dass das kühlkanalseitige Ende 28a der Fügenaht 28 außerhalb des Kühlkanals 27 liegt. Diese Maßnahme erlaubt es, das Verschlusselement 26 bereits am Rohling des Kolbenringelements 12 vor dem Verbinden mit dem Rohling des Kolbengrundkörpers 11 zu befestigen. Dies ermöglicht eine besonders einfache Anwendung eines Schweißverfahrens zum Fügen der Kolbenbauteile, bevorzugt ein Strahlschweißverfahren, besonders bevorzugt ein Laserschweißverfahren. Die bei diesen Fügeverfahren auftretenden Schweißperlen können in diesem Fall während des Fügeprozesses nicht in den Kühlkanal 27 gelangen und diesen verengen oder verschmutzen. Das Verschlusselement 26 kann bereits vor dem Fügen dauerhaft am Rohling des Kolbenringelements 11 befestigt werden. Das Verschlusselement 26 kann aber auch vor dem Fügen reversibel bzw. austauschbar angebracht und, beispielsweise im Falle einer Verschmutzung mit Schweißperlen, im Anschluss an den Fügeprozess durch ein sauberes Verschlusselement 26 ersetzt werden.

Figur 4 zeigt eine weitere Darstellung des Verschlusselements 26 des Kolbens 10. In dieser Darstellung ist zu erkennen, dass das Verschlusselement 26 eine Eintrittsöffnung 31 für Kühlöl aufweist. Die Eintrittsöffnung 31 ist mit einem hülsenförmigen Führungselement 32 versehen, welches in den Kühlkanal 27 hineinragt und in an sich bekannter Weise zur Führung des in den Kühlkanal 27 geleiteten Kühlöls dient. Das Verschlusselement 26 weist in an sich bekannter Weise ferner mindestens eine Austrittsöffnung für Kühlöl (nicht dargestellt) auf.

Der erfindungsgemäße Kolben 10 wird besonders bevorzugt auf die nachfolgend beschriebene Weise herstellt.

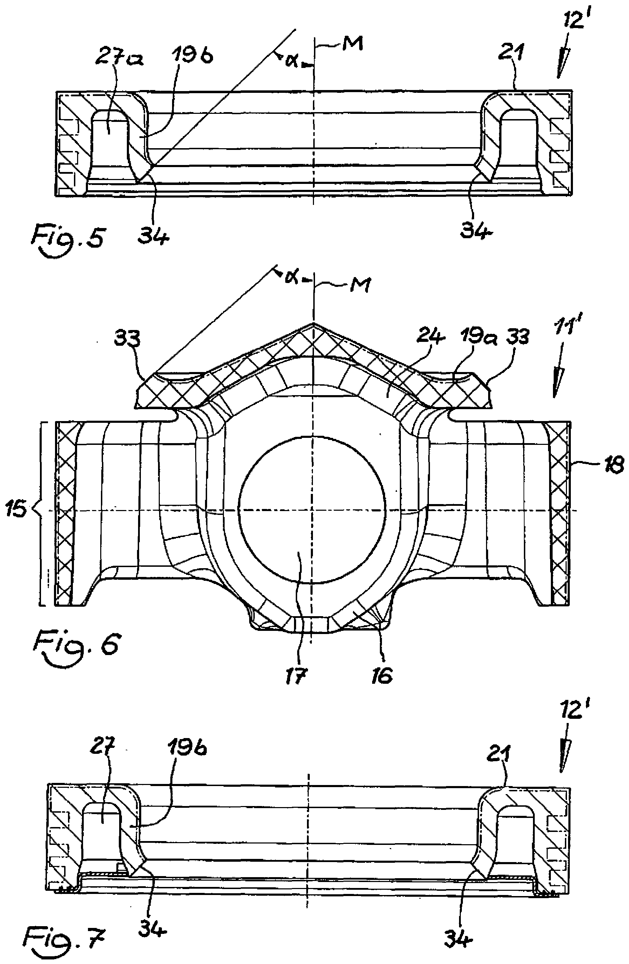

Gemäß den Figuren 5 bis 8 wird zunächst ein im Ausführungsbeispiel vorbearbeiteter Rohling 11' eines Kolbengrundkörpers 11 sowie ein im Ausführungsbeispiel vorbearbeiteter Rohling 12' eines Kolbenringelements 12 bereitgestellt.

Die Rohlinge 11', 12' entsprechen im Wesentlichen dem fertigen Kolbengrundkörper 11 bzw. dem fertigen Kolbenringelement 12, so dass gleiche Strukturen mit denselben Bezugszeichen versehen sind und diesbezüglich auf die obige Beschreibung zu den Figuren 1 und 2 verwiesen wird. Zwei wesentliche Unterschiede bestehen darin, dass im Rohling 11' des Kolbengrundkörpers 11 die Nabenbohrungen 17 nicht fertig ausgeführt sind und dass im Rohling 12' des Kolbenringelements 12 die Ringnuten fehlen.

Die Rohlinge 11', 12' können, je nach Wahl des Werkstoffs, gegossen, geschmiedet oder pulvermetallurgisch gesintert sein. In den Rohling 11' des Kolbengrundkörpers 11 ist im Ausführungsbeispiel der Bodenbereich 19a der Verbrennungsmulde 19 eingeformt. Daraus ergibt eine umlaufende Fügefläche 33, die mit der Mittelachse M des Rohlings 11', welche mit der Mittelachse M des fertigen Kolbens 10 identisch ist, den gleichen spitzen Winkel α einschließt, den die Fügenaht 28 im fertigen Kolben 10 mit der Mittelachse M einschließt.

In den Rohling 12' des Kolbenringelements 12 ist im Ausführungsbeispiel der Wandbereich 19b der Verbrennungsmulde 19 eingeformt. Daraus ergibt sich eine umlaufende Fügefläche 34, die mit der Mittelachse M des Rohlings 12', welche mit der Mittelachse M des fertigen Kolbens 10 identisch ist, den gleichen spitzen Winkel α einschließt, den die Fügenaht 28 im fertigen Kolben 10 mit der Mittelachse M einschließt.

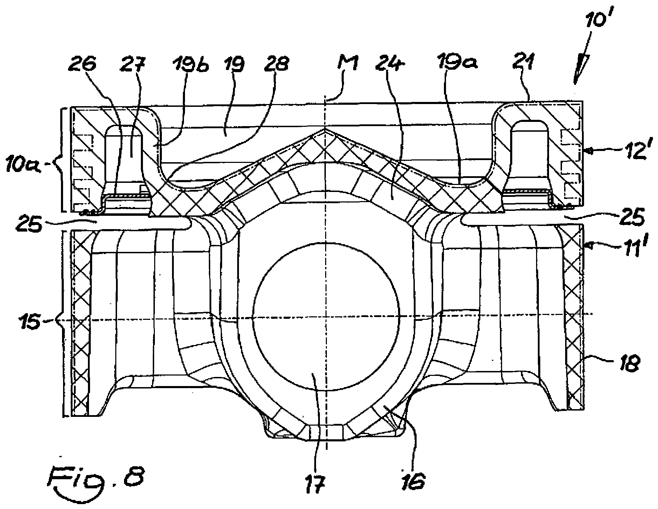

Die Fügeflächen 33, 34 des Rohlings 11' des Kolbengrundkörpers 11 bzw. des Rohlings 12' des Kolbenringelements 12 korrespondieren derart miteinander, dass die Rohlinge 11', 12' zu einem Kolbenrohling 10' (vgl. Figur 8) gefügt werden können.

Im Ausführungsbeispiel wird die im Rohling 12' des Kolbenringelements 12 vorgesehene Aussparung 27a unter Ausbildung eines Kühlkanals 27 mit einem Verschlusselement 26 im Form eines Blechs verschlossen (vgl. Figur 7). Das Blech kann einstückig oder mehrstückig sein; es kann ferner ein einfaches Blech oder ein Federblech verwendet werden. Das Verschlusselement 26 wird an der Unterseite der Ringpartie 23 des Rohlings 12' Kolbenringelements 12 im Ausführungsbeispiel mittels Schweißstellen 29 befestigt. Der freie Rand 26a des Verschlusselements 26 ist im Ausführungsbeispiel an der Rückseite des Wandbereichs 19b der Verbrennungsmulde 19 des Rohlings 12' des Kolbenringelements 12 positioniert. Der freie Rand 26a des Verschlusselements 26 kann an der Rückseite des Wandbereichs 19b anliegen, aber auch von der Rückseite des Wandbereichs 19b in Form eines Spalts beabstandet sein. Wenn als Verschlusselement 26 ein Federblech verwendet wird, kann der freie Rand 26a auch unter Vorspannung an der Rückseite des Wandbereichs 19b anliegen.

Selbstverständlich kann das Verschlusselement 26 auch lösbar mit dem Rohling 12' des Kolbenringelements 12 verbunden und nach dem Fügeprozess (siehe unten) wieder entfernt werden.

Im Anschluss daran werden der Rohling 11' des Kolbengrundkörpers 11 und der Rohling 12' des Kolbenringelements 12 über ihre Fügeflächen 33, 34 unlösbar zu einem Kolbenrohling 10' (vgl. Figur 8) verbunden.

Das hier dargestellte Ausführungsbeispiel des erfindungsgemäßen Kolbens 10 bzw. des erfindungsgemäßen Herstellungsverfahrens, erlaubt es in besonders vorteilhafter Weise, die Rohlinge 11', 12' mittels Strahlschweißen, insbesondere Laserschweißen, miteinander zu verbinden. Die bei diesem Fügeverfahren auftretenden Schweißperlen können während des Fügeprozesses nicht in den Kühlkanal 27 gelangen und diesen verengen oder verschmutzen, da der Kühlkanal 27 mittels des Verschlusselements 26 dauerhaft oder lösbar verschlossen ist. In letzterem Fall kann das Verschlusselement 26 beispielsweise im Falle einer Verschmutzung mit Schweißperlen im Anschluss an den Fügeprozess durch ein sauberes Verschlusselement 26 ersetzt werden. Da die Fügeflächen 33, 34 darüber hinaus mit der Mittelachse M der Rohlinge 11', 12' einen spitzen Winkel α einschließen, kann die Richtung der während des Strahlschweißens austretenden Schweißperlen derart gesteuert werden, dass sie außerhalb des Kühlkanals 27 verbleiben. Die Schweißperlen können bspw. auf das Verschlusselement 26 treffen, welches im Anschluss ggf. ausgetauscht werden kann. Die Schweißperlen können aber auch ins Freie austreten oder auf die Innenseite des Kolbenschafts 15 auftreffen, wo sie entweder verbleiben oder im Zuge einer an sich bekannten Nachbearbeitung entfernt werden können.

Da in der besonders bevorzugten Ausführungsform das kühlkanalseitige Ende 28a der Fügenaht 28 außerhalb des Kühlkanals 27 liegt, können, je nach verwendetem Fügeverfahren, gegebenenfalls Materialreste wie Schweißwulste einfach entfernt werden. Ferner wird vermieden, dass derartige Materialreste den Kühlkanal 27 verengen bzw. verunreinigen.

Selbstverständlich kann das Verschlusselement 26 auch erst nach dem Fügevorgang unter Ausbildung des Kühlkanals 27 am Kolben 10 angebracht werden.

Der Kolbenrohling 10' wird in an sich bekannter Weise, abhängig von der Ausbildung der Rohlinge 11', 12', nachgearbeitet bzw. fertigbearbeitet. Bspw. können Außenform, Oberflächen, Brennraummulde, Ringpartie, Nabenbohrungen, etc. fertig bearbeitet werden. Im Ergebnis erhält man den oben beschriebenen Kolben 10 gemäß den Figuren 1 und 2.

Im Ergebnis wird ein Kolben 10 mit entkoppeltem Schaft erhalten, dessen umlaufende Ausnehmung 25, welche die thermische Entkopplung des Kolbenschafts bewirkt, mit einer frei wählbaren und bei Bedarf möglichst niedrig gehaltenen Bauhöhe hergestellt werden kann.

## Patentansprüche

1. Kolben (10) für einen Verbrennungsmotor mit einem Kolbenkopf (10a), einem Kolbenschaft (15) und einer zwischen dem Kolbenkopf (10a) und dem Kolbenschaft (15) ausgebildeten umlaufenden Ausnehmung (25), wobei
- der Kolben (10) einen Kolbengrundkörper (11) und ein Kolbenringelement (12) aufweist,
- der Kolbengrundkörper (11) zumindest einen Bodenbereich (19a) einer Verbrennungsmulde (19) sowie den Kolbenschaft (15) aufweist,
- das Kolbenringelement (12) zumindest einen Kolbenboden (21), einen Wandbereich (19b) der Verbrennungsmulde (19), einen umlaufenden Feuersteg (22) und eine mit Ringnuten versehene umlaufende Ringpartie (23) aufweist,
- das Kolbenringelement (12) zwischen dem Wandbereich (19b) der Verbrennungsmulde (19) und der Ringpartie (23) einen mit einem Verschlusselement (26) verschlossenen umlaufenden Kühlkanal (27) aufweist,
- der Kolbengrundkörper (11) und das Kolbenringelement (12) im Bereich der Verbrennungsmulde (19) jeweils eine umlaufende Fügenaht (28) aufweisen, über welche sie unlösbar miteinander verbunden sind,
**dadurch gekennzeichnet,**
**dass** ein kühlkanalseitiges Ende (28a) der Fügenaht (28) außerhalb des Kühlkanals (27) liegt.

2. Kolben nach Anspruch 1, **dadurch gekennzeichnet, dass** die Fügenaht (28) mit der Mittelachse (M) des Kolbens (10) einen spitzen Winkel (α) einschließt.

3. Kolben nach Anspruch 1, **dadurch gekennzeichnet, dass** das Verschlusselement (26) im Bereich der Ringpartie (23) am Kolbenringelement (12) gehalten ist.

4. Kolben nach Anspruch 1, **dadurch gekennzeichnet, dass** der freie Rand (26a) des Verschlusselements (26) oberhalb der Fügenaht (28) angeordnet ist.

5. Kolben nach Anspruch 1, **dadurch gekennzeichnet, dass** das Verschlusselement als einstückiges oder mehrstückiges Blechbauteil ausgebildet ist.

6. Kolben nach Anspruch 1, **dadurch gekennzeichnet, dass** das Verschlusselement als einstückiges oder mehrstückiges Federblech ausgebildet ist und mit seinem freien Rand (26a) unter Vorspannung am Kolben (10) anliegt.

7. Kolben nach Anspruch 1, **dadurch gekennzeichnet, dass** das Verschlusselement (26) mindestens eine Eintrittsöffnung (31) aufweist, die mit einem in den Kühlkanal (27) ragenden hülsenförmigen Führungselement (32) für das Kühlöl versehen ist.

## Claims

1. Piston (10) for an internal combustion engine, with a piston head (10a), a piston skirt (15), and a circumferential recess (25) configured between the piston head (10a) and the piston skirt (15), wherein
- the piston (10) has a piston base body (11) and a piston ring element (12),
- the piston base body (11) comprises at least one crown region (19a) of a combustion bowl (19) as well as the piston skirt (15),
- the piston ring element (12) comprises at least one piston crown (21), a wall region (19b) of the combustion bowl (19), a circumferential top land (22) and a circumferential ring belt (23) provided with ring grooves,
- the piston ring element (12) has a circumferential cooling channel (27) between the wall region (19b) of the combustion bowl (19) and the ring belt (23), closed with a closure element (26),
- the piston base body (11) and the piston ring element (12) each comprise a circumferential joining seam (28) in the region of the combustion bowl (19), by way of which seam they are non-releasably connected with one another,
**characterized in that**
- an end (28a) of the joining seam (28) on the cooling channel side lies outside of the cooling channel (27).

2. Piston according to claim 1, **characterized in that** the joining seam (28) encloses an acute angle (α) with the center axis (M) of the piston (10).

3. Piston according to claim 1, **characterized in that** the closure element (26) is held on the piston ring element (12) in the region of the ring belt (23).

4. Piston according to claim 1, **characterized in that** the free edge (26a) of the closure element (26) is disposed above the joining seam (28).

5. Piston according to claim 1, **characterized in that** the closure element is configured as a one-piece or multi-piece sheet-metal component.

6. Piston according to claim 1, **characterized in that** the closure element is configured as a one-piece or multi-piece spring sheet and lies, under bias, with its free edge (26a) against the piston (10).

7. Piston according to claim 1, **characterized in that** the closure element (26) has at least one entry opening (31) provided with a sleeve-shaped guide element (32) for the cooling oil that projects into the cooling channel (27).

## Revendications

1. Piston (10) pour un moteur à combustion interne avec une tête de piston (10a), une jupe de piston (15) et un évidement (25) périphérique réalisé entre la tête de piston (10a) et la jupe de piston (15), dans lequel
- le piston (10) présente un corps de base de piston (11) et un élément de segment de piston (12),
- le corps de base de piston (11) présente au moins une zone de fond (19a) d'une chambre de combustion (19) ainsi que la jupe de piston (15),
- l'élément de segment de piston (12) présente au moins un fond de piston (21), une zone de paroi (19b) de la chambre de combustion (19), un segment de feu périphérique (22) et une partie de segment (23) périphérique dotée de rainures annulaires,
- l'élément de segment de piston (12) présente entre la zone de paroi (19b) de la chambre de combustion (19) et la partie de segment (23), un canal de refroidissement (27) périphérique fermé avec un élément de fermeture (26),
- le corps de base de piston (11) et l'élément de segment de piston (12) présentent dans la zone de la chambre de combustion (19) respectivement un joint d'assemblage (28) périphérique, via lequel ils sont reliés l'un à l'autre de manière inamovible,
**caractérisé en ce**
**qu'**une extrémité côté canal de refroidissement (28a) du joint d'assemblage (28) se situe en dehors du canal de refroidissement (27).

2. Piston selon la revendication 1, **caractérisé en ce que** le joint d'assemblage (28) forme un angle aigu ( 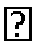 ) avec l'axe médian (M) du piston (10).

3. Piston selon la revendication 1, **caractérisé en ce que** l'élément de fermeture (26) est maintenu dans la zone de la partie de segment (23) sur l'élément de segment de piston (12).

4. Piston selon la revendication 1, **caractérisé en ce que** le bord libre (26a) de l'élément de fermeture (26) est agencé au-dessus du joint d'assemblage (28).

5. Piston selon la revendication 1, **caractérisé en ce que** l'élément de fermeture est réalisé sous forme de composant en tôle d'une pièce ou de plusieurs pièces.

6. Piston selon la revendication 1, **caractérisé en ce que** l'élément de fermeture est réalisé sous forme de tôle élastique d'une pièce ou de plusieurs pièces et s'appuie avec son bord libre (26a) sous précontrainte contre le piston (10).

7. Piston selon la revendication 1, **caractérisé en ce que** l'élément de fermeture (26) présente au moins une ouverture d'entrée (31), qui est dotée d'un élément de guidage (32) en forme de douille faisant saillie dans le canal de refroidissement (27) pour l'huile de refroidissement.
